# EUROPÄISCHE PATENTSCHRIFT

(11) **EP 3 526 889 B1**
(45) Veröffentlichungstag und Bekanntmachung des Hinweises auf die Patenterteilung: **31.08.2022**
(21) Anmeldenummer: 16804721.5
(22) Anmeldetag: 22.11.2016
(51) Int. Cl.: H02M 1/12, H03H 7/01, H02J 3/01, H02M 7/483

(54) **UMRICHTERANORDNUNG MIT STERNPUNKTBILDNER**
INVERTER ASSEMBLY WITH A GROUNDING TRANSFORMER
ENSEMBLE INVERSEUR AVEC UN NEUTRE À LA TERRE

(43) Veröffentlichungstag der Anmeldung: 21.08.2019
(73) Patentinhaber: Siemens Energy Global GmbH & Co. KG, 81739 München (DE)
(72) Erfinder: ARMSCHAT, Christoph, 91058 Erlangen (DE); SCHÖN, Andre, 91058 Erlangen (DE)
(86) Internationale Anmeldenummer: PCT/EP2016/078383
(87) Internationale Veröffentlichungsnummer: WO 2018/095508

(56) Entgegenhaltungen:
- CN-A- 101 393 465
- DE-A1- 3 337 834
- DE-A1- 3 545 405
- US-A- 5 663 636
- US-A1- 2014 139 167
- BOR-REN LIN ET AL: "Analysis and operation of hybrid active filter for harmonic elimination", POWER CONVERSION CONFERENCE, 2002. PCC-OSAKA 2002. PROCEEDINGS OF THE OSAKA, JAPAN 2-5 APRIL 2002, PISCATAWAY, NJ, USA,IEEE, US, vol. 2, 2 April 2002 (2002-04-02), pages 800-805, XP010590255, DOI: 10.1109/PCC.2002.997622 ISBN: 978-0-7803-7156-9
- BARCENAS E ET AL: "Shunt Active Power Filters and PWM Rectifiers in Three-Phase Three Wire Systems: A Survey", APPLIED POWER ELECTRONICS CONFERENCE AND EXPOSITION, 2006. APEC '06. T WENTY-FIRST ANNUAL IEEE MARCH 19, 2006, PISCATAWAY, NJ, USA,IEEE, PISCATAWAY, NJ, USA, 19 March 2006 (2006-03-19), pages 1307-1313, XP010910114, DOI: 10.1109/APEC.2006.1620708 ISBN: 978-0-7803-9547-3

## Beschreibung

Die Erfindung betrifft eine Umrichteranordnung mit einem zwischen einem Wechselspannungsnetz und einem Gleichspannungskreis schaltbaren Umrichter, der Umrichterarme aufweist, die sich jeweils zwischen einem Wechselspannungsanschluss und einem Gleichspannungsanschluss erstrecken, wobei jeder Umrichterarm eine Reihenschaltung zweipoliger Submodule umfasst, die Leistungshalbleiter umfassen, sowie einem wechselspannungsseitig des Umrichters angeordneten Sternpunktbildner, der zu einem geerdeten Sternpunkt verschaltete Drosselspulen aufweist.

Eine solche Umrichteranordnung ist aus der DE 10 2009 034 354 A1 bekannt. Die bekannte Umrichteranordnung wird dazu eingesetzt, eine Übertragung elektrischer Energie zwischen einem Wechselspannungsnetz und einem Gleichspannungsnetz zu ermöglichen. Dazu ist der Umrichter mittels des Gleichspannungsanschlusses mit dem Gleichspannungskreis bzw. einer Gleichspannungsleitung und mittels des Wechselspannungsanschlusses mit dem Wechselspannungsnetz verbunden. Die Umrichteranordnung kann dabei beispielsweise Teil einer Hochspannungsgleichstromübertragungsanlage (HGÜ) sein. Der Umrichter der bekannten Umrichteranordnung ist ein sogenannter modularer Mehrstufenumrichter (MMC). Jeder Umrichterarm des MMC umfasst eine Reihenschaltung zweipoliger Submodule. Das Submodul umfasst wiederum Leistungshalbleiterschalter sowie einen Energiespeicher, meist in Form eines Kondensators. Die Leistungshalbleiterschalter sind derart mit dem Energiespeicher verschaltet, dass durch geeignete Steuerung der Leistungshalbleiterschalter an den Polen bzw. Klemmen des Submoduls eine Spannung null oder eine an dem Energiespeicher abfallende Energiespeicherspannung erzeugbar sind. Die Leistungshalbleiterschalter und die Submodule sind voneinander unabhängig steuerbar, so dass mittels des MMC wechselspannungsseitig eine stufenförmige Umrichterwechselspannung erzeugbar ist, deren Stufenhöhe im Wesentlichen durch die Energiespeicherspannung und die erzeugbare Stufenanzahl durch die Anzahl der Submodule des Leistungshalbleiterventils bestimmt sind. Aufgrund des Aufbaus und der Funktionsweise des MMC können Pole des Gleichspannungskreises bezüglich des Erdpotenzials grundsätzlich Spannungen mit unterschiedlich hohen Beträgen aufweisen. Insbesondere in einer Ausführung als sogenannter symmetrischer Monopol gibt es keine starre Anbindung des Umrichters bzw. des Gleichspannungskreises an das Erdpotenzial. In einem solchen Fall können Fremdschichtströme, die auf den Oberflächen von Isolatoren gegen Erde abfließen einen resultierenden Gleichstrom gegen Erde bewirken. Dieser resultierende Gleichstrom kann sich auf der Wechselspannungsseite des Umrichters nachteilig auswirken. In Leistungstransformatoren führt der Gleichstrom zum Beispiel zu einer Verschiebung des Arbeitspunktes in der Magnetisierungskennlinie. Diese Verschiebung kann zu einer erhöhten Geräuschbildung und zu einer Sättigung des Leistungstransformators im Betrieb führen.

Der Sternpunktbildner der bekannten Umrichteranordnung ist dazu vorgesehen, die Spannungen im Gleichspannungskreis gegenüber dem Erdpotenzial zu symmetrieren. Dazu ist der Sternpunktbildner derart ausgestaltet, dass er für Wechselstrom mit einer Grundschwingungsfrequenz des Wechselspannungsnetzes einen Strompfad mit einer hohen Impedanz zum Erdpotenzial darstellt. Zugleich bildet der Sternpunktbildner für einen Gleichstrom einen Strompfad mit einer niedrigen Impedanz zum Erdpotenzial. Auf diese Weise ist eine Potenzialanbindung der Umrichteranordnung an das Erdpotenzial realisiert. Der bekannte Sternpunktbildner ist dabei wechselspannungsseitig parallel zum Wechselspannungsnetz zwischen dem Umrichter und einem Transformator angeordnet. Jede Drosselspule des Sternpunktbildners ist auf der dem Sternpunkt abgewandten Seite mit einer ihr zugeordneten Phase des Wechselspannungsnetzes verbunden bzw. über eine Schalteinheit verbindbar. Die Wechselströme mit der Grundschwingungsfrequenz des Wechselspannungsnetzes, üblicherweise beträgt diese Grundschwingungsfrequenz 50 Hz oder 60 Hz, können über den Sternpunktbildner nicht abfließen. Die durch eine Asymmetrie der Spannungen im Gleichspannungskreis entstehenden Gleichströme können hingegen über den Sternpunktbildner abfließen und den Gleichstromkreis damit symmetrieren.

Aus der US 2014/01391167 A1 ist eine Umrichteranordnung mit einem Umrichter bekannt, bei der wechselspannungsseitig des Umrichters Phasenfilter für jede Phase des Wechselspannungsnetzes vorgesehen sind, die zu einem geerdeten Sternpunkt verbunden sind. Jedes Phasenfilter umfasst eine Reihenschaltung aus einer Induktivität und einem Widerstand, die in Reihe zu einer Kapazität angeordnet ist.

Die US 5 663 636 B schlägt zum Unterdrücken der dritten Harmonischen einen wechselspannungsseitig des Umrichters anzuordnenden Bandsperren-Filter vor. Der Bandsperren-Filter umfasst dabei eine LC-Parallelschaltung.

Die wissenschaftlichen Veröffentlichungen "Analysis and operation of hybrid active filter for harmonic elimination", PCC-Osaka 2002, und "Shunt Active Power Filters and PWM Rectifiers in Three-Phase Three Wire Systems: A Survey",APEC 2006, beschreiben den Betrieb von aktiven Sperrfiltern.

Die Aufgabe der vorliegenden Erfindung besteht darin, eine artgemäße Umrichteranordnung vorzuschlagen, bei der eine weiter verbesserte Vermeidung unerwünschter Ströme möglich ist.

Die Aufgabe wird bei einer artgemäßen Umrichteranordnung erfindungsgemäß nach Anspruch 1 durch ein Sperrfilter gelöst, das zwischen dem Sternpunkt des Sternpunktbildners und einer Erdanbindung angeordnet und zum Unterdrücken einer Harmonischen einer Wechselspannung des Wechselspannungsnetzes eingerichtet ist.

Erfindungsgemäß ist demnach ein Sperrfilter vorgesehen, der zwischen den Drosselspulen und Erde angeordnet ist. Das Sperrfilter ist derart ausgebildet, dass mittels des Sperrfilters wenigstens eine Harmonische der Wechselspannung im Wechselspannungsnetz herausgefiltert werden kann. Als Harmonische wird dabei jeder Wechselspannungsanteil der Wechselspannung im Wechselspannungsnetz verstanden, dessen Frequenz ein Vielfaches der Grundfrequenz der Wechselspannung im Wechselspannungsnetz entspricht. Die Grundfrequenz kann dabei üblicherweise 50 Hz oder 60 Hz betragen.

Ein Vorteil der erfindungsgemäßen Umrichteranordnung ist die Möglichkeit zur Vermeidung oder zumindest Minimierung unerwünschter Ströme im Wechselspannungsnetz, die sich aus harmonischen Spannungsanteilen der Wechselspannung des Wechselspannungsnetzes ergeben. Beispielsweise kann die bei einigen Anwendungen im Umrichter erzeugte dritte Harmonische mit der dreifachen Frequenz der Wechselspannung durch das Sperrfilter unterdrückt werden. Eine solche dritte Harmonische wird oftmals vorsätzlich erzeugt, weil dadurch eine höhere Ausnutzung einer Transformator-Sekundärspannung erreicht werden kann, also einer umrichterseitigen Spannung eines Leistungstransformators, mittels dessen der Umrichter mit dem Wechselspannungsnetz verbunden ist. Zudem ist dadurch auch eine höhere Ausnutzung der Submodule des Umrichters ermöglicht. Die dritte Harmonische wirkt sich jedoch im Wechselspannungsnetz, falls nicht unterdrückt, nachteilig aus, weil sie zu einer entsprechenden Harmonischen des Stromes führen kann.

Zweckmäßigerweise ist jede Drosselspule auf ihrer dem Sternpunkt abgewandten Seite galvanisch mit einer zugeordneten Phase des Wechselspannungsnetzes verbunden. Insbesondere ist eine galvanische Trennung zwischen den Drosselspulen bzw. dem Sternpunkt des Sternpunktbildners und dem Wechselspannungsnetz, abgesehen von etwaigen Schaltern, nicht notwendigerweise vorgesehen.

Erfindungsgemäß umfasst das Sperrfilter einen Parallelschwingkreis mit einer Kapazität und einer Induktivität, wobei eine Resonanzfrequenz des Parallelschwingkreises auf die Frequenz der zu unterdrückenden Harmonischen abgestimmt ist. Die Induktivität ist geeigneterweise in Form einer oder mehrerer Drosseln, die Kapazität in Form eines oder mehrerer Kondensatoren realisiert. Die Induktivität L und die Kapazität C sind derart ausgelegt, dass für die Resonanzfrequenz F des Sperrfilters F = 1 / 2* pi * sqrt(C * L) gilt. Die Resonanzfrequenz entspricht der Frequenz der zu unterdrückenden Harmonischen.

Gemäß der Erfindung ist die Induktivität eine Primärwicklung eines Sperrfiltertransformators, wobei eine Sekundärwicklung des Sperrfiltertransformators mit einem Wechselspannungsanschluss eines Sperrfilterumrichters verbunden ist, wobei der Sperrfilterumrichter dazu eingerichtet ist, am Wechselspannungsanschluss eine Wechselspannung Uh zu erzeugen, deren Frequenz der Frequenz der zu unterdrückenden Harmonischen entspricht. Mittels des Sperrfilterumrichters kann ein DC-Fluss im Eisenkern des Sperrfiltertransformators aktiv unterdrückt werden. Als Sperrfilterumrichter kann beispielsweise jeder geeignete Mittelspannungsumrichter einsetzbar sein. Die Wechselspannung Uh kann mit einem entsprechenden Phasenversatz zu der zu unterdrückenden Harmonischen der Wechselspannung im Wechselspannungsnetz erzeugt werden. Dabei ist vorgesehen, den Sperrfilterumrichter als eine Kombination einer AC-Spannungsquelle und einer DC-Stromquelle auszulegen. Mittels des Sperrfilterumrichters kann ein DC-Fluss somit in einem Eisenkern der Induktivität des Sperrfilters aktiv zu null geregelt werden. Damit weist der Sternpunktbildner zugleich eine besonders niedrige Impedanz für Gleichströme und eine besonders hohe Sperrfähigkeit für die zu unterdrückende Harmonische auf.

Bevorzugt liegt ein Übersetzungsverhältnis Ü am Sperrfiltertransformator zwischen 1/1000 und 1/10. Mit einer solchen Übersetzung der Spannungen am Sperrfiltertransformator lässt sich insbesondere der Sperrfilterumrichter auf niedrigere Spannungen auslegen, wodurch er besonders kostengünstig ist.

Gemäß einer Ausführungsform der Erfindung bildet der Sperrfilterumrichter eine Vollbrückenschaltung mit vier abschaltbaren Leistungshalbleitern und einem Umrichterkondensator aus, die so mit dem Umrichterkondensator verschaltet sind, dass am Wechselspannungsanschluss des Sperrfilterumrichters eine an dem Umrichterkondensator abfallende Kondensatorspannung, eine Nullspannung oder aber die inverse Kondensatorspannung erzeugbar ist. Mit einer geeigneten Ansteuerung, beispielsweise mittels Pulsweitenmodulation, ist eine bevorzugte Wechselspannung Uh am Wechselspannungsanschluss des Sperrfilterumrichters erzeugbar.

Der Sternpunktbildner kann beispielsweise zwischen einem wechselspannungsseitig des Umrichters angeordneten Transformator und dem Wechselspannungsanschluss des Umrichters angeordnet sein. Die Drosselspulen können dabei direkt mit den ihnen zugeordneten Phasen der Wechselspannungsleitung parallel zum Transformator schaltbar sein.

Vorzugsweise ist jeder Drosselspule des Sternpunktbildners eine Kompensationswicklung zugeordnet, wobei die Kompensationswicklungen in einer elektrischen Reihenschaltung zwischen dem Sternpunkt und Erde bzw. dem Sperrfilter angeordnet sind, wobei die Kompensationswicklungen und die Drosselspulen einen gemeinsamen Spulenkern aufweisen, wobei das Sperrfilter zwischen der Reihenschaltung der Kompensationswicklungen und der Erdanbindung angeordnet ist. Durch die Kompensationswicklungen lässt sich die Impedanz gegenüber der Grundschwingungsfrequenz des Wechselspannungsnetzes weiter erhöhen. Dabei kann die Windungszahl der Kompensationswicklungen beispielsweise 1/3 der Windungszahl der Drosselspulen betragen. Diese Ausführungsform der Erfindung weist den Vorteil auf, dass der Sternpunktbildner eine verhältnismäßig niedrige Nullsystemimpedanz im Normalbetrieb und eine hohe Nullsystemimpedanz in einem gleichspannungsseitigen Fehlerfall aufweist.

In einigen Anwendungen ist es von Vorteil, wenn wechselspannungsseitig des Umrichters ein Transformator angeordnet ist. Der Transformator weist netzseitige sowie konverterseitige Wicklungen auf und verbindet den Umrichter mit einem netzseitigen Wechselspannungsnetz. Die netzseitigen Wicklungen können beispielsweise in einer Sternanordnung, die konverterseitigen Wicklungen beispielsweise in einer Delta- oder Sternanordnung angeordnet sein. Der Sternpunkt der konverterseitigen Sternanordnung kann geerdet sein. Der aus der Unsymmetrie im Gleichspannungskreis resultierende Gleichstrom (auch als Erdstrom bezeichnet) kann in diesem Fall eine nachteilige Vormagnetisierung im Transformator bewirken.

Gemäß einer Ausführungsform der Erfindung sind die Drosselspulen des Sternpunktbildners als konverterseitige Wicklungen des Transformators ausgebildet, der wechselspannungsseitig des Umrichters angeordnet ist. Die Kompensationswicklungen sind zugleich als Tertiärwicklungen des Transformators ausgebildet, wobei ein Wickelsinn der Kompensationswicklungen einem Wickelsinn der zugeordneten Drosselspulen entgegengerichtet ist und der Transformator und der Sternpunktbildner einen gemeinsamen Spulenkern aufweisen. Der gemeinsame Spulenkern durchsetzt demnach sowohl die netzseitigen und die konverterseitigen Wicklungen des Transformators als auch die Kompensationswicklungen. Der resultierende Gleichstrom in der Umrichteranordnung fließt gemäß dieser Ausführungsform verteilt durch die konverterseitigen Wicklungen des Transformators und in Summe durch die Kompensationswicklungen. Durch die gegensinnig orientierten Kompensationswicklungen wird eine im Spulenkern entstehende magnetische Spannung kompensiert. Auf diese Weise lässt sich die zuvor beschriebene Vormagnetisierung des Transformators vorteilhaft vermeiden. Aus diesem Effekt resultiert zudem eine Verringerung von Störgeräuschen im Transformator.

Gemäß einer weiteren Ausführungsform der Erfindung ist der Sternpunktbildner zwischen einem wechselspannungsseitig des Umrichters angeordneten Transformator und dem Wechselspannungsanschluss des Umrichters angeordnet, wobei ein Wickelsinn der Kompensationswicklungen und der Drosselspulen gleichgerichtet ist. Gemäß dieser Ausführungsform bilden die Kompensationswicklungen eine Reihenschaltung aus, die einerseits mit dem Sternpunkt des Sternpunktbildners und anderseits mit einem Erdanschluss verbunden ist. Der Wickelsinn jeder Kompensationswicklung ist zum Wickelsinn der zugeordneten Drosselspule gleichgerichtet. Die Vorteile dieser Anordnung sind eine besonders hohe Nullsystemimpedanz im Normalbetrieb und eine niedrige Nullsystemimpedanz in einem gleichspannungsseitigen Fehlerfall. Zur gezielten Festlegung der Nullsysteminduktivität und des Sättigungspunktes können auch hier Luftspalte in jeden Eisenschenkel des gemeinsamen Spulenkerns eingebracht werden. Ferner kann die dritte Harmonische im Sternpunkt der drei Hauptwicklungen effizient unterdrückt werden.

Vorzugsweise umfasst der Sternpunktbildner einen Überspannungsableiter, der zwischen dem Sternpunkt und Erde parallel zu den Kompensationswicklungen oder dem Sperrfilter geschaltet ist. Dieser Überspannungsableiter sorgt für eine Spannungsbegrenzung in einem Fehlerfall.

Gemäß einer Ausführungsvariante der Erfindung weist jedes Submodul eine Vollbrückenschaltung mit vier abschaltbaren Leistungshalbleitern und einem Energiespeicher auf, die so mit dem Energiespeicher verschaltet sind, dass an Ausgangsklemmen des Submoduls eine an dem Energiespeicher abfallende Energiespeicherspannung, eine Nullspannung oder aber die inverse Energiespeicherspannung erzeugbar ist.

Gemäß einer weiteren Ausführungsvariante weist jedes Submodul eine Halbbrückenschaltung mit zwei abschaltbaren Leistungshalbleitern und einem Energiespeicher auf, die so mit dem Energiespeicher verschaltet sind, dass an Ausgangsklemmen des Submoduls eine an dem Energiespeicher abfallende Energiespeicherspannung oder eine Nullspannung erzeugbar ist.

Es ist gleichwohl denkbar, wenn einige Submodule des Umrichters Halbbrückenschaltungen und einige andere Submodule des Umrichters Vollbrückenschaltungen aufweisen. Es ist hierbei anzumerken, dass die Anwendung der Erfindung nicht auf modulare Mehrstufenumrichter beschränkt ist. Es ist beispielsweise denkbar, dass die Submodule jeweils einen ein- und abschaltbaren Leistungshalbleiter und eine antiparallele Freilaufdiode umfassen. In diesem Fall ist der Umrichter als ein Zwischenkreisumrichter ausgebildet, der einen Gleichspannungszwischenkreis aufweist, in dem ein Zwischenkreiskondensator angeordnet ist.

Die Erfindung wird im Folgenden anhand der Figuren 1 bis 3 weiter erläutert.
Figur 1 zeigt ein erstes Ausführungsbeispiel einer erfindungsgemäßen Umrichteranordnung in einer schematischen Darstellung;
Figur 2 zeigt ein zweites Ausführungsbeispiel einer erfindungsgemäßen Umrichteranordnung in einer schematischen Darstellung;
Figur 3 zeigt ein Beispiel eines Sperrfilters der Umrichteranordnungen der Figuren 1 und 2 in einer schematischen Darstellung;
Figur 4 zeigt ein Beispiel eines Umrichters für eine der Umrichteranordnungen der Figuren 1 bis 3.

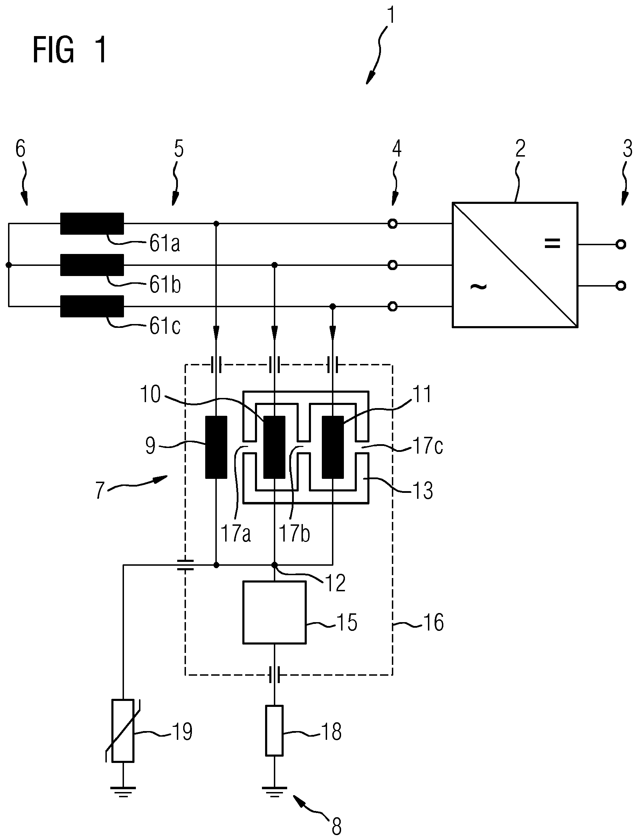

Im Einzelnen ist in Figur 1 eine Umrichteranordnung 1 gezeigt. Die Umrichteranordnung 1 umfasst einen Umrichter 2. Der Umrichter 2 weist eine Gleichspannungsseite, die mit einem Gleichspannungskreis, beispielsweise einem Gleichspannungszwischenkreis einer HGÜ-Anlage oder einem Gleichspannungsnetz mittels eines Gleichspannungsanschlusses 3 verbindbar ist. Ferner weist der Umrichter 2 eine Wechselspannungsseite auf, die mittels Wechselspannungsanschlusses 4 mit einem Wechselspannungsnetz 5 verbindbar ist, das im vorliegenden Beispiel dreiphasig ist. Im in Figur 1 dargestellten Ausführungsbeispiel erfolgt die Anbindung an das Wechselspannungsnetz 5 über einen Transformator 6. Der Transformator 6 umfasst netzseitige Wicklungen (in der Figur 1 figürlich nicht dargestellt und konverterseitige Wicklungen 61a-c auf der dem Umrichter 2 zugewandten Seite des Transformators 6. Die konverterseitigen Wicklungen 61a-c sind jeweils in einer Sternschaltung miteinander verbunden. Die netzseitigen Wicklungen sind beispielsweise ebenfalls in einer Sternschaltung miteinander verbunden. Im Prinzip ist jedoch auch jede andere geeignete Konfiguration des Transformators möglich, beispielsweise eine Stern-Dreieck-Konfiguration.

Zwischen dem Transformator 6 und dem Umrichter 2 ist ein Sternpunktbildner 7 angeordnet, der parallel zum Wechselspannungsnetz 5 geschaltet ist, bzw. zwischen den Phasen des Wechselspannungsnetzes 5 und einem Erdanschluss 8.

Der Sternpunktbildner 7 umfasst eine erste Drosselspule 9, eine zweite Drosselspule 10 und eine dritte Drosselspule 11. Jede Drosselspule 9-11 ist mit einer ihr zugeordneten Phase des Wechselspannungsnetzes 5 galvanisch verbunden. Auf der dem Wechselspannungsnetz 5 abgewandten Seite sind die Drosselspulen 9-11 zu einem gemeinsamen Sternpunkt 12 zusammengeschaltet. Die drei Drosselspulen 9-11 weisen einen gemeinsamen Spulenkern 13 auf. Dabei ist jede Drosselspule 9, 10 bzw. 11 von einem Teilkern des gemeinsamen Spulenkerns 13 durchsetzt. Jeder Teilkern weist einen Luftspalt 17a-c auf, dessen Funktion eine Einstellung einer Sättigungskennlinie bzw. eines Sättigungspunktes der Drosseln 9-11 ist.

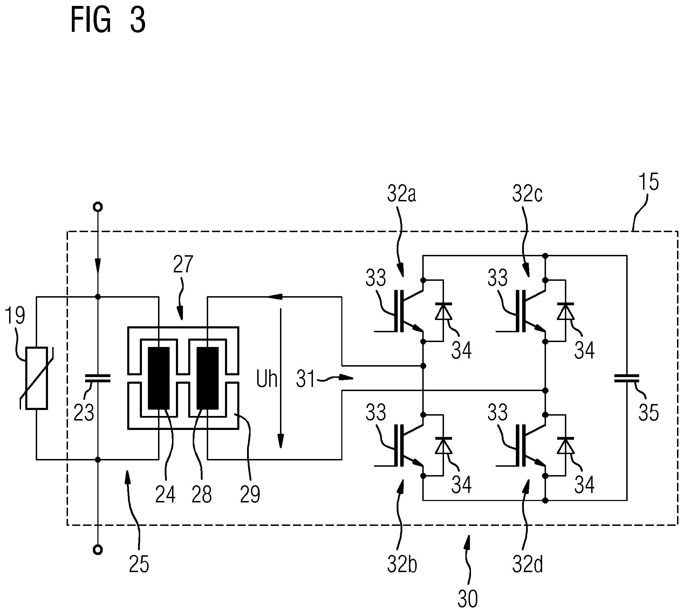

Zwischen dem gemeinsamen Sternpunkt 12 und dem Erdanschluss bzw. der Erdanbindung 8 ist ein Sperrfilter 15 angeordnet. Auf den Aufbau des Sperrfilters 15 wird im Zusammenhang mit der Figur 3 unten näher eingegangen.

Die Drosselspulen 9-11 sowie das Sperrfilter 15 sind in einem gemeinsamen Gehäuse 16 angeordnet, das beispielsweise eine Ölisolation, eine SF₆-Isolation, eine Ester-Isolation oder dergleichen bereitstellt.

In einer Reihenschaltung zu dem Sperrfilter 15 befindet sich ein Widerstandselement 18, das zur Strombegrenzung dient. Parallel zu der Reihenschaltung des Sperrfilters 15 und des Widerstandselementes 18 ist ein Überspannungsableiter 19 zur Spannungsbegrenzung angeordnet.

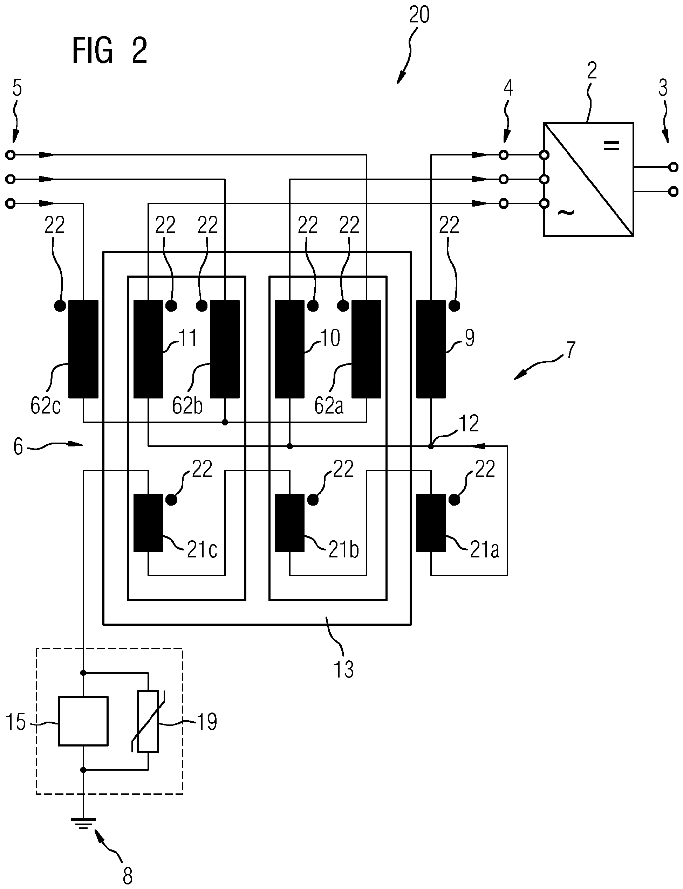

Figur 2 zeigt eine Umrichteranordnung 20. In den Figuren 1 und 2 wurden gleiche bzw. gleichartige Elemente der Umrichteranordnungen 1 bzw. 20 mit gleichen Bezugszeichen versehen.

Die Umrichteranordnung 20 umfasst einen Umrichter 2. Der Umrichter 2 weist eine Gleichspannungsseite, die mit einem Gleichspannungskreis, beispielsweise einem Gleichspannungszwischenkreis einer HGÜ-Anlage oder einem Gleichspannungsnetz mittels eines Gleichspannungsanschlusses 3 verbindbar ist. Ferner weist der Umrichter 2 eine Wechselspannungsseite auf, die mittels Wechselspannungsanschlusses 4 mit einem dreiphasigen Wechselspannungsnetz 5 verbindbar ist. Im in Figur 2 dargestellten Ausführungsbeispiel erfolgt die Anbindung an das Wechselspannungsnetz 5 über einen Transformator 6.

Zwischen dem Transformator 6 und dem Umrichter 2 ist ein Sternpunktbildner 7 angeordnet, der parallel zum Wechselspannungsnetz 5 geschaltet ist, bzw. zwischen den Phasen des Wechselspannungsnetzes 5 und einem Erdanschluss 8. Der Sternpunktbildner 7 umfasst drei Drosselspulen 9-11. Auf der dem Wechselspannungsnetz 5 abgewandten Seite sind die Drosselspulen 9-11 zu einem gemeinsamen Sternpunkt 12 zusammengeschaltet.

Die Drosselspulen 9-11 der Umrichteranordnung 20 sind im Unterschied zu der Ausführung der Umrichteranordnung 1 der Figur 1 als konverterseitige bzw. sekundärseitigen Wicklungen des Transformators 6 ausgeführt. Ferner umfasst der Transformator 6 netz- bzw. primärseitige Wicklungen 62a-c. Der ersten Drosselspule 9 ist eine erste Kompensationswicklung 21a, der zweiten Drosselspule 10 eine zweite Kompensationswicklung 21b und der dritten Drosselspule 11 eine dritte Kompensationswicklung 21c zugeordnet. Die Kompensationswicklungen 21a-c sind in einer Reihenschaltung zwischen dem gemeinsamen Sternpunkt 12 und dem Erdanschluss 8 angeordnet. Es ist zu erkennen, dass der gemeinsame Spulenkern 13 des Transformators 6 auch die Kompensationswicklungen 21a-c durchsetzt. Der Wickelsinn der Kompensationswicklungen 21a-c der Umrichteranordnung 20 ist entgegengesetzt zum Wickelsinn der Drosselspulen 9-11. Der Wickelsinn von Spulen ist dabei in Figur 2 jeweils durch Punkte 22 angedeutet. Durch die entgegengesetzte Wicklung wird eine Kompensation der Magnetisierung des Spulenkerns 13 erreicht, wodurch eine Vormagnetisierung des Transformators 6 vermieden werden kann.

Zwischen dem gemeinsamen Sternpunkt 12 und dem Erdanschluss bzw. der Erdanbindung 8 ist ein Sperrfilter 15 angeordnet. Auf den Aufbau des Sperrfilters 15 wird im Zusammenhang mit der Figur 3 unten näher eingegangen.

Parallel zum Sperrfilter 15 ist ein Überspannungsableiter 19 zur Spannungsbegrenzung angeordnet.

Figur 3 zeigt ein Sperrfilter 15, der beispielsweise in einer der Umrichteranordnungen 1 bzw. 20 der Figuren 1 und 2 einsetzbar ist.

Das Sperrfilter 15 umfasst einen Parallelschwingkreis 25 aus einer Kapazität 23 und einer Induktivität 24. Die Kapazität 23 und die Induktivität 24 sind derart ausgelegt, dass die Resonanzfrequenz des Parallelschwingkreises 25 der dritten Harmonischen der Wechselspannung im Wechselspannungsnetz 5 entspricht. Die Induktivität 24 ist dabei eine Primärwicklung eines Sperrfiltertransformators 27 mit einer Sekundärwicklung 28 und einem Übersetzungsverhältnis von Sekundärseite zu Primärseite von 1:100. Die Primärwicklung 24 und die Sekundärwicklung 28 sind von einem gemeinsamen Eisenkern 29 mit Luftspalt durchsetzt.

Der Sperrfiltertransformator 27 ist sekundärseitig mit einem Sperrfilterumrichter 30 verbunden. Der Sperrfilterumrichter 30 weist einen Wechselspannungsanschluss 31 zum Verbinden mit dem Sperrfiltertransformator 27 auf. Der Sperrfilterumrichter 30 umfasst ferner eine erste Schalteinheit 32a, eine zweite Schalteinheit 32b, eine dritte Schalteinheit 32c und eine vierte Schalteinheit 32d. Jede der Schalteinheiten 32a-d umfasst ihrerseits einen ein- und abschaltbaren Leistungshalbleiterschalter 33 sowie eine antiparallele Freilaufdiode 34. Ein Energiespeicher 35 ist parallel zu den Schalteinheiten 32a-b bzw. 32c-d angeordnet. Somit bildet der Sperrfilterumrichter 30 eine Vollbrückenschaltung aus. Mittels einer geeigneten Steuerung der Schalteinheiten 32a-d kann am Wechselspannungsanschluss 31 eine Spannung Uh mit der Frequenz der zu unterdrückenden dritten Harmonischen erzeugt werden.

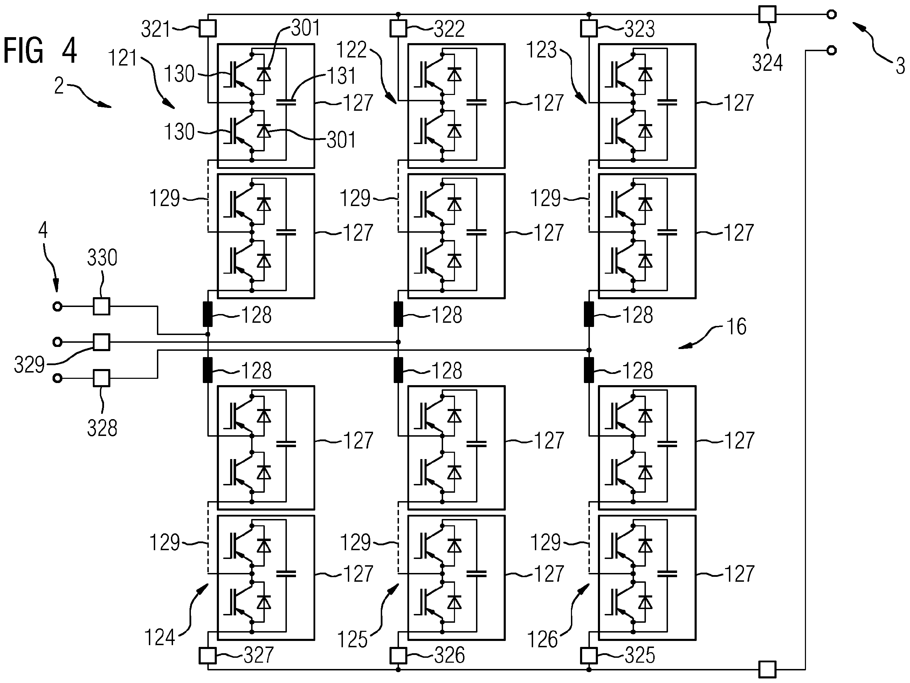

In Figur 4 ist ein Umrichter 2 für eine der Umrichteranordnungen der Figuren 1 bis 3 dargestellt. Der Umrichter 2 ist zwischen einem Wechselspannungsanschluss 4 und einem Gleichspannungsanschluss 3 geschaltet. Damit ist der Umrichter 2 gleichspannungsseitig mit einer Gleichspannungsleitung bzw. einem Gleichspannungsnetz, wechselspannungsseitig mit einem Wechselspannungsnetz verbindbar. Der Umrichter 2 ist ein modularer Mehrstufenumrichter (MMC). Der MMC weist zwischen der Gleichspannungsseite und der Wechselspannungsseite angeordnete Leistungshalbleiterventile 121-126 auf.

Jedes Leistungshalbleiterventil 121-126 umfasst eine Reihenschaltung von zweipoligen Submodulen 127 sowie eine Glättungsdrossel 128. Im in Figur 2 dargestellten Ausführungsbeispiel sind alle Submodule 127 gleichartig aufgebaut, was jedoch im Allgemeinen nicht erforderlich ist. Mittels unterbrochener Linien 129 ist in Figur 4 angedeutet, dass jedes Leistungshalbleiterventil 121-126 eine größere Anzahl von Submodulen 127 aufweisen kann als die in Figur 4 explizit dargestellten zwei Submodule 127.

Jedes Submodul 127 umfasst zwei Halbleiterschalter 130, dem jeweils eine Freilaufdiode 301 antiparallel geschaltet ist, und einen Energiespeicher in Form eines Kondensators 131. Die Submodule 127 sind somit als Halbbrückenschaltungen ausgebildet. Die Halbleiterschalter 130 der Submodule 127 sind voneinander unabhängig steuerbar.

Anstelle der Halbbrückenschaltungen können die Submodule auch beispielsweise als dem Fachmann bekannte Vollbrückenschaltungen realisiert werden.

Der Umrichter 2 umfasst ferner Messeinrichtungen 321-330, die zum Messen von Strömen und/oder Spannungen abgerichtet sind.

Zudem ist eine in Figur 4 explizit nicht dargestellte Regelungseinheit zum Regeln des Umrichters 2 vorgesehen.

## Patentansprüche

1. Umrichteranordnung (1) mit
- einem zwischen einem Wechselspannungsnetz (5) und einem Gleichspannungskreis schaltbaren Umrichter (2), der Umrichterarme (121-126) aufweist, die sich jeweils zwischen einem Wechselspannungsanschluss (4) und einem Gleichspannungsanschluss (3) erstrecken, wobei jeder Umrichterarm (121-126) eine Reihenschaltung zweipoliger Submodule (127) umfasst, die Leistungshalbleiter (130) umfassen, sowie
- einem wechselspannungsseitig des Umrichters (2) angeordneten Sternpunktbildner (7), der zu einem geerdeten Sternpunkt (12) verschaltete Drosselspulen (9, 10, 11) aufweist, und der derart ausgebildet ist, dass durch eine Asymmetrie von Spannungen im Gleichspannungskreis entstehenden Gleichströme über den Sternpunktbildner abfließen können,
**gekennzeichnet durch**
ein Sperrfilter (15), das zwischen dem Sternpunkt (12) und einer Erdanbindung (8) angeordnet und zum Unterdrücken einer Harmonischen einer Wechselspannung des Wechselspannungsnetzes (5) eingerichtet ist, wobei das Sperrfilter (15)
einen Parallelschwingkreis (25) mit einer Kapazität (23) und einer Induktivität (24) umfasst, wobei eine Resonanzfrequenz des Parallelschwingkreises (25) auf die Frequenz der zu unterdrückenden Harmonischen abgestimmt ist,
wobei die Induktivität (24) eine Primärwicklung eines Sperrfiltertransformators (27) ist, wobei eine Sekundärwicklung (28) des Sperrfiltertransformators (27) mit einem Wechselspannungsanschluss (31) eines Sperrfilterumrichters (30) verbunden ist, wobei der Sperrfilterumrichter (30) dazu eingerichtet ist, am Wechselspannungsanschluss (31) eine Wechselspannung (Uh) zu erzeugen, deren Frequenz der Frequenz der zu unterdrückenden Harmonischen entspricht, und
wobei das Sperrfilter (15) ferner dazu ausgebildet ist,
einen DC-Fluss in einem Eisenkern der Induktivität (24) des Sperrfiltertransformators (27) aktiv zu null zu regeln.

2. Umrichteranordnung (1) nach Anspruch 1, wobei jede Drosselspule (9, 10, 11) auf ihrer dem Sternpunkt (12) abgewandten Seite galvanisch mit einer zugeordneten Phase des Wechselspannungsnetzes (5) verbunden ist.

3. Umrichteranordnung (1) nach einem der vorangehenden Ansprüche, wobei ein Übersetzungsverhältnis Ü am Sperrfiltertransformator (27) zwischen 1/1000 und 1/10 liegt.

4. Umrichteranordnung (1) nach einem der vorangehenden Ansprüche, wobei der Sperrfilterumrichter (30) eine Vollbrückenschaltung mit wenigstens vier abschaltbaren Leistungshalbleitern (33) und einem Umrichterkondensator (35) ausbildet, die so mit dem Umrichterkondensator (35) verschaltet sind, dass am Wechselspannungsanschluss (31) des Sperrfilterumrichters (30) eine an dem Umrichterkondensator (35) abfallende Kondensatorspannung, eine Nullspannung oder aber die inverse Kondensatorspannung erzeugbar ist.

5. Umrichteranordnung (1) nach einem der Ansprüche 1 bis 4, wobei der Sternpunktbildner (7) zwischen einem wechselspannungsseitig des Umrichters (2) angeordneten Transformator (6) und dem Wechselspannungsanschluss (4) des Umrichters (2) angeordnet ist.

6. Umrichteranordnung (20) nach einem der Ansprüche 1 bis 5, wobei jeder Drosselspule (9, 10, 11) des Sternpunktbildners (7) eine Kompensationswicklung (21a-c) zugeordnet ist, wobei die Kompensationswicklungen (21a-c) in einer elektrischen Reihenschaltung zwischen dem Sternpunkt (12) und Erdanbindung (8) angeordnet sind, wobei die Kompensationswicklungen (21a-c) und die Drosselspulen (9, 10, 11) einen gemeinsamen Spulenkern (13) aufweisen, wobei das Sperrfilter (15) zwischen der Reihenschaltung der Kompensationswicklungen (21a-c) und der Erdanbindung (8) angeordnet ist.

7. Umrichteranordnung (20) nach Anspruch 6, wobei die Drosselspulen (9, 10, 11) des Sternpunktbildners (7) als konverterseitige Wicklungen eines Transformators (6) ausgebildet sind, der wechselspannungsseitig des Umrichters (2) angeordnet ist, und die Kompensationswicklungen (21a-c) als Tertiärwicklungen des Transformators (6) ausgebildet sind, wobei ein Wickelsinn der Kompensationswicklungen (21a-c) einem Wickelsinn der zugeordneten Drosselspulen entgegengerichtet ist und der Transformator (6) und der Sternpunktbildner (7) einen gemeinsamen Spulenkern (13) aufweisen.

8. Umrichteranordnung (1) nach Anspruch 6, wobei der Sternpunktbildner (7) zwischen einem wechselspannungsseitig des Umrichters (2) angeordneten Transformator (6) und dem Wechselspannungsanschluss (4) des Umrichters (2) angeordnet ist, wobei ein Wickelsinn der Kompensationswicklungen (21a-c) und der Drosselspulen (9, 10, 11) gleichgerichtet ist.

9. Umrichteranordnung (1) nach einem der vorangehenden Ansprüche, wobei der Sternpunktbildner (7) einen Überspannungsableiter (19) umfasst, der zwischen dem Sternpunkt (12) und Erdanbindung (8) parallel zu dem Sperrfilter (15) geschaltet ist.

10. Umrichteranordnung (1) nach einem der vorhergehenden Ansprüche, wobei jedes Submodul (127) eine Vollbrückenschaltung mit vier abschaltbaren Leistungshalbleitern und einem Energiespeicher aufweist, die so mit dem Energiespeicher verschaltet sind, dass an Ausgangsklemmen des Submoduls eine an dem Energiespeicher abfallende Energiespeicherspannung, eine Nullspannung oder aber die inverse Energiespeicherspannung erzeugbar ist.

11. Umrichteranordnung (1) nach einem der vorhergehenden Ansprüche, wobei jedes Submodul (127) eine Halbbrückenschaltung mit zwei abschaltbaren Leistungshalbleitern (130) und einem Energiespeicher (131) aufweist, die so mit dem Energiespeicher (131) verschaltet sind, dass an Ausgangsklemmen des Submoduls (127) eine an dem Energiespeicher abfallende Energiespeicherspannung oder eine Nullspannung erzeugbar ist.

## Claims

1. Converter arrangement (1) with
- a converter (2) that can be connected between an alternating voltage grid (5) and a direct voltage circuit, which converter has converter arms (121-126) that each extend between an alternating voltage connection (4) and a direct voltage connection (3), wherein each converter arm (121-126) comprises a series circuit of two-pole submodules (127) that comprise power semiconductors (130), as well as
- a star point reactor (7) that is arranged on the alternating voltage side of the converter (2), comprises inductor coils (9, 10, 11) that are connected to form an earthed star point (12), and is designed in such a way that direct currents arising in the direct voltage circuit as a result of an asymmetry of the voltages can flow away via the star point reactor,
**characterized by**
a suppression filter (15) that is arranged between the star point (12) and an earth connection (8) and that is designed to suppress a harmonic of an alternating voltage of the alternating voltage grid (5), wherein the suppression filter (15) comprises a parallel resonant circuit (25) with a capacitor (23) and an inductor (24), wherein a resonant frequency of the parallel resonant circuit (25) is matched to the frequency of the harmonic to be suppressed,
wherein the inductor (24) is a primary winding of a suppression filter transformer (27), wherein a secondary winding (28) of the suppression filter transformer (27) is connected to an alternating voltage connection (31) of a suppression filter converter (30), wherein the suppression filter converter (30) is designed to generate an alternating voltage (Uh) at the alternating voltage connection (31), the frequency of which corresponds to the frequency of the harmonic that is to be suppressed, and wherein the suppression filter (15) is also designed to actively regulate a DC flux in an iron core of the inductor (24) of the suppression filter transformer (27) to zero.

2. Converter arrangement (1) according to Claim 1, wherein the end of each inductor coil (9, 10, 11) that is remote from the star point (12) is galvanically connected to an assigned phase of the alternating voltage grid (5).

3. Converter arrangement (1) according to either of the preceding claims, wherein a transformation ratio U at the suppression filter transformer (27) lies between 1/1000 and 1/10.

4. Converter arrangement (1) according to one of the preceding claims, wherein the suppression filter converter (30) forms a full bridge circuit with at least four power semiconductors (33) that can be switched off and a converter capacitor (35) that are connected to the converter capacitor (35) in such a way that a capacitor voltage dropped across the converter capacitor (35), a zero voltage, or, however, the inverse capacitor voltage can be generated at the alternating voltage connection (31) of the suppression filter converter (30).

5. Converter arrangement (1) according to one of Claims 1 to 4, wherein the star point reactor (7) is arranged between a transformer (6) arranged on the alternating voltage side of the converter (2) and the alternating voltage connection (4) of the converter (2).

6. Converter arrangement (20) according to one of Claims 1 to 5, wherein a compensation winding (21a-c) is assigned to each inductor coil (9, 10, 11) of the star point reactor (7), wherein the compensation windings (21a-c) are arranged in an electrical series circuit between the star point (12) and earth connection (8), wherein the compensation windings (21a-c) and the inductor coils (9, 10, 11) have a common coil core (13), wherein the suppression filter (15) is arranged between the series circuit of the compensation windings (21a-c) and the earth connection (8).

7. Converter arrangement (20) according to Claim 6, wherein the inductor coils (9, 10, 11) of the star point reactor (7) are designed as converter-side windings of a transformer (6) that is arranged on the alternating voltage side of the converter (2), and the compensation windings (21a-c) are designed as tertiary windings of the transformer (6), wherein a winding direction of the compensation windings (21a-c) is the opposite to a winding direction of the assigned inductor coils, and the transformer (6) and the star point reactor (7) comprise a common coil core (13).

8. Converter arrangement (1) according to Claim 6, wherein the star point reactor (7) is arranged between a transformer (6) arranged on the alternating voltage side of the converter (2) and the alternating voltage connection (4) of the converter (2), wherein a winding direction of the compensation windings (21a-c) and the inductor coils (9, 10, 11) is the same.

9. Converter arrangement (1) according to one of the preceding claims, wherein the star point reactor (7) comprises an overvoltage arrester (19) that is connected between the star point (12) and the earth connection (8) in parallel with the suppression filter (15).

10. Converter arrangement (1) according to one of the preceding claims, wherein each submodule (127) comprises a full bridge circuit with four power semiconductors that can be switched off and an energy store, which power semiconductors are connected to the energy store in such a way that an energy store voltage dropped across the energy store, a zero voltage, or, however, the inverse energy store voltage can be generated at output terminals of the submodule.

11. Converter arrangement (1) according to one of the preceding claims, wherein each submodule (127) comprises a half bridge circuit with two power semiconductors (130) that can be switched off and an energy store (131), which power semiconductors are connected to the energy store (131) in such a way that an energy store voltage dropped across the energy store or a zero voltage can be generated at output terminals of the submodule (127).

## Revendications

1. Montage (1) à onduleur, comprenant
- un onduleur (2), qui peut être monté entre un réseau (5) à tension alternative et un circuit à tension continue et qui a des branches (121 à 126) d'onduleur, qui s'étendent chacune entre une borne (4) de tension alternative et une borne (3) de tension continue, dans lequel chaque branche (121 à 126) d'onduleur comprend un circuit série de sous-modules (127) bipolaires, qui comprennent des semiconducteurs (130) de puissance, ainsi que
- un neutre (7) à la terre, qui est monté du côté de la tension alternative de l'onduleur (2) et qui a des bobines (9, 10, 11) de self montées entre un neutre (12) à la terre et constituées de manière à ce que, par une dissymétrie de tension, des courants continus se créant dans le circuit à tension continue puissent sortir du neutre,
**caractérisé par**
un filtre (15) coupe-bande, qui est monté entre le neutre (12) et une liaison (8) à la terre et qui est conçu pour supprimer un harmonique d'une tension alternative du réseau (5) à tension alternative, le filtre (15) coupe-bande comprenant un circuit (25) oscillant parallèle ayant une capacité (23) et une inductance (24), une fréquence de résonnance du circuit (25) oscillant parallèle étant accordée à la fréquence de l'harmonique à supprimer, dans lequel l'inductance (24) est un enroulement primaire d'un transformateur (27) à filtre coupe-bande, dans lequel un enroulement (28) secondaire du transformateur (27) à filtre coupe-bande est relié à une borne (31) de tension alternative d'un convertisseur (30) à filtre coupe-bande, le convertisseur (30) à filtre coupe-bande étant conçu pour produire à la borne (31) de tension alternative une tension (Uh) alternative, dont la fréquence correspond à la fréquence de l'harmonique à supprimer, et dans lequel le filtre (15) coupe-bande est constitué en outre pour réguler d'une manière active à zéro un flux de courant continu dans un noyau de fer de l'inductance (24) du transformateur (27) à filtre coupe-bande.

2. Montage (1) à onduleur suivant la revendication 1, dans lequel chaque bobine (9, 10, 11) de self est reliée, de son côté loin du neutre (12), galvaniquement à une phase associée du réseau (5) à tension alternative.

3. Montage (1) à onduleur suivant l'une des revendications précédentes, dans lequel un rapport Ü de transformation du transformateur (27) à filtre coupe-bande est compris entre 1/1000 et 1/10.

4. Montage (1) à onduleur suivant l'une des revendications précédentes, dans lequel l'onduleur (30) à filtre coupe-bande constitue un circuit à pont complet ayant au moins quatre semiconducteurs (33) de puissance pouvant être bloqués et un condensateur (35) d'onduleur, qui sont montés avec le condensateur (35) d'onduleur, de manière à pouvoir produire, à la borne (31) de tension alternative de l'onduleur (30) à filtre coupe-bande, une tension de condensateur chutant au condensateur (35) de l'onduleur, une tension nulle, mais aussi la tension de condensateur inverse.

5. Montage (1) à onduleur suivant l'une des revendications 1 à 4, dans lequel le neutre (7) est monté entre un transformateur (6) monté du côté de la tension alternative de l'onduleur (2) et la borne (4) de tension alternative de l'onduleur (2).

6. Montage (20) à onduleur suivant l'une des revendications 1 à 5, dans lequel un enroulement (21a-c) de compensation est associé à chaque bobine (9, 10, 11) de self du neutre (7), dans lequel les enroulements (21a-c) de compensation sont montés en un circuit électrique série entre le neutre (12) et la liaison (8) à la terre, dans lequel les enroulements (21a-c) de compensation et les bobines (9, 10, 11) de self ont un noyau (13) commun de bobine, dans lequel le filtre (15) coupe-bande est monté entre le circuit série des enroulements (21a-c) de compensation et la liaison (8) à la terre.

7. Montage (20) à onduleur suivant la revendication 6, dans lequel les bobines (9, 10, 11) de self du neutre (7) sont constituées sous la forme d'enroulements côté convertisseur d'un transformateur (6), qui est monté du côté de la tension alternative de l'onduleur (2), et les enroulements (21a-c) de compensation sont constitués sous la forme d'enroulements tertiaires du transformateur (6), dans lequel un sens d'enroulement des enroulements (21a-c) de compensation est contraire à un sens d'enroulement des bobines de self associées, et le transformateur (6) et le neutre (7) ont un noyau (13) commun de bobine.

8. Montage (1) à onduleur suivant la revendication 6, dans lequel le neutre (7) est monté entre un transformateur (6), monté du côté de la tension alternative de l'onduleur (2), et la borne (4) de tension alternative de l'onduleur (2), un sens d'enroulement des enroulements (21a-c) de compensation et des bobines (9, 10, 11) de self étant le même.

9. Montage (1) à onduleur suivant l'une des revendications précédentes, dans lequel le neutre (7) comprend un parafoudre (19), qui est monté en parallèle au filtre (15) coupe-bande entre le neutre (12) et la liaison (8) à la terre.

10. Montage (1) à onduleur suivant l'une des revendications précédentes, dans lequel chaque sous-module (127) a un circuit à pont complet ayant quatre semiconducteurs de puissance pouvant être bloqués et un accumulateur d'énergie, qui sont montés avec l'accumulateur d'énergie, de manière à pouvoir produire, aux bornes de sortie du sous-module, une tension d'accumulateur d'énergie chutant à l'accumulateur d'énergie, une tension nulle, mais aussi la tension inverse de l'accumulateur d'énergie.

11. Montage (1) à onduleur suivant l'une des revendications précédentes, dans lequel chaque sous-module (127) a un circuit à demi-pont ayant deux semiconducteurs (130) de puissance pouvant être bloqués et un accumulateur (131) d'énergie, qui est monté avec l'accumulateur (131), de manière à pouvoir produire, aux bornes de sortie du sous-module (127), une tension d'accumulateur d'énergie chutant à l'accumulateur d'énergie ou une tension nulle.
